# EUROPEAN PATENT APPLICATION

(11) **EP 4 718 948 A1**
(43) Date of publication of application: **01.04.2026**
(21) Application number: 25205095.0
(22) Date of filing: 26.09.2025
(51) Int. Cl.: H05B 47/155, H04W 4/80, H05B 47/19, H05B 47/175

(54) **METHOD FOR SETTING SEQUENCE NUMBER OF LIGHT-EMITTING DEVICE, LIGHT-EMITTING DEVICE, AND MEDIUM**

(30) Priority: 29.09.2024 CN 202411380179
(71) Applicant: Harman International Industries, Incorporated, Stamford, CT 06901 (US)
(72) Inventor: GAN, Shuibao, Shenzhen City (CN)
(74) Representative: Rummler, Felix

(57) **Abstract**

Provided are a method for setting a sequence number of a light-emitting device, a light-emitting device, and a medium. The method may be implemented by a first light-emitting device, wherein the first light-emitting device establishes a short-range communication connection with a computing device, and the method comprises: obtaining a device setup command from the computing device via the short-range communication connection, and entering a device setup mode in response to the device setup command; broadcasting a notification in response to the device setup command to notify remaining light-emitting devices other than the first light-emitting device in a predetermined environment to enter the device setup mode; setting, in response to a user input, a first sequence number of the first light-emitting device based on whether sequence number information regarding sequence numbers is received from the remaining light-emitting devices; and broadcasting first sequence number information regarding the first sequence number.

## Description

### Technical Field

The present application relates to the field of lighting control, and more specifically relates to a method for setting a sequence number of a light-emitting device, a light-emitting device, and a computer-readable storage medium.

### Background

In many occasions at present, for example, small and medium-sized stage performances such as concerts, dramas, or exhibitions, or special events such as weddings or parties, it is necessary to flexibly control lighting effects. These lighting effects are achieved by controlling light emission of a plurality of light-emitting devices. The light-emitting devices generally comprise light emitting devices capable of emitting light under electrical drive, such as light-emitting diodes (LEDs) and optionally LED lamps of various powers, various colors, and/or various shapes constituted from various optical devices.

In order to achieve different lighting effects, the plurality of light-emitting devices need to be grouped, and can be controlled respectively groupwise. For some application scenarios, a plurality of same light-emitting devices can be used to achieve desired lighting effects. Since these light-emitting devices have same appearance and same model, it is usually necessary to set or mark these light-emitting devices with sequence numbers before grouping, so as to facilitate grouping them for lighting control. Or, even if a plurality of light-emitting devices have different appearances, they can still be set with sequence numbers to facilitate grouping.

Therefore, for an application scenario where a plurality of light-emitting devices are used, a solution for setting or marking sequence numbers for the plurality of light-emitting devices is needed.

### Summary of the Invention

According to an aspect of the present application, a method for setting a sequence number of a light-emitting device is provided, the method is implemented by a first light-emitting device, wherein the first light-emitting device establishes a short-range communication connection with a computing device, and the method comprises: obtaining a device setup command from the computing device via the short-range communication connection, and entering a device setup mode in response to the device setup command; broadcasting a notification in response to the device setup command to notify remaining light-emitting devices other than the first light-emitting device in a predetermined environment to enter the device setup mode; setting, in response to a user input, a first sequence number of the first light-emitting device based on whether sequence number information regarding sequence numbers is received from the remaining light-emitting devices; and broadcasting first sequence number information regarding the set first sequence number.

According to an embodiment of the present application, the setting the first sequence number of the first light-emitting device comprises: setting, in response to the user input, the first sequence number of the first light-emitting device to 1, in a case where no sequence number information regarding sequence numbers is received from the remaining light-emitting devices.

According to an embodiment of the present application, the setting the first sequence number of the first light-emitting device comprises: setting, in response to the user input and in a case where at least one piece of sequence number information is received from the remaining light-emitting devices, the first sequence number of the first light-emitting device to a maximum sequence number among sequence numbers associated with the at least one piece of sequence number information plus 1.

According to an embodiment of the present application, the method further comprises: obtaining a preset number of to-be-set light-emitting devices from the computing device via the short-range communication connection; sending indication information to the computing device via the short-range communication connection, in response to the maximum sequence number being equal to the preset number, or in response to the first sequence number of the first light-emitting device being equal to the preset number, or in response to detecting that the number of broadcast addresses broadcasting the at least one piece of sequence number information is equal to the preset number; and receiving a setup-stop command from the computing device via the short-range communication connection, and broadcasting a notification associated with the setup-stop command, so that the remaining light-emitting devices exit the device setup mode.

According to an embodiment of the present application, the method further comprises: sending, upon each receipt of sequence number information regarding a new sequence number or in response to setting the first sequence number, indication information indicating the new sequence number or the first sequence number to the computing device via the short-range communication connection; and receiving a setup-stop command from the computing device via the short-range communication connection, and broadcasting a notification associated with the setup-stop command, so that the remaining light-emitting devices exit the device setup mode.

According to an embodiment of the present application, the short-range communication connection is a communication connection based on Bluetooth low energy technology.

According to another aspect of the present application, a method for setting a sequence number of a light-emitting device is provided, the method is implemented by a second light-emitting device, wherein the second light-emitting device does not establish a short-range communication connection with a computing device, and the method comprises: entering a device setup mode based on a notification broadcasted from a first light-emitting device in a predetermined environment; setting, in response to a user input, a sequence number of the second light-emitting device based on whether sequence number information regarding sequence numbers is received from remaining light-emitting devices other than the second light-emitting device in the predetermined environment; and broadcasting sequence number information regarding the set sequence number.

According to an embodiment of the present application, the setting the sequence number of the second light-emitting device comprises: setting, in response to the user input, the sequence number of the second light-emitting device to 1, in a case where no sequence number information regarding sequence numbers is received from the remaining light-emitting devices.

According to an embodiment of the present application, the setting the sequence number of the second light-emitting device comprises: setting, in response to the user input and in a case where at least one piece of sequence number information regarding sequence numbers is received from the remaining light-emitting devices, the sequence number of the second light-emitting device to a maximum sequence number among sequence numbers associated with the at least one piece of sequence number information plus 1.

According to an embodiment of the present application, the method further comprises: exiting the device setup mode, in response to receiving a broadcasted notification associated with a setup-stop command from the first light-emitting device.

According to another aspect of the present application, a method for setting a sequence number of a light-emitting device is further provided, the method is executed by a computing device, and the method comprises: establishing a short-range communication connection with a first light-emitting device among a plurality of light-emitting devices in a predetermined environment; sending a device setup command to the first light-emitting device via the short-range communication connection, so that the first light-emitting device enters a device setup mode, wherein the first light-emitting device broadcasts a notification in response to the device setup command to notify remaining light-emitting devices other than the first light-emitting device to enter the device setup mode; and sending a setup-stop command to the first light-emitting device via the short-range communication connection, in response to sequence numbers of all light-emitting devices or a predetermined number of light-emitting devices among the plurality of light-emitting devices having been set.

According to an embodiment of the present application, the method further comprises: receiving indication information indicating a sequence number equal to the predetermined number or second indication information indicating completion of setting from the first light-emitting device via the short-range communication connection; and generating the setup-stop command, in response to receiving the indication information or the second indication information.

According to an embodiment of the present application, the method further comprises: generating the setup-stop command, in response to a lapse of a predetermined period of time from sending the device setup command.

According to another aspect of the present application, a light-emitting device configured to execute the above method is further provided.

According to still another aspect of the present application, a computer-readable storage medium is provided, storing a computer program or instruction thereon, wherein the computer program or instruction, when executed by a processor, causes the processor to execute the above method.

According to an embodiment of the present application, a method for setting a sequence number of a light-emitting device is provided, which only needs to establish only one short-range communication connection between a lighting control device and a light-emitting device, and can complete setting of the sequence numbers of all light-emitting devices by sequentially providing user inputs to the light-emitting devices via a user, and using a broadcast function of the light-emitting devices. Compared with the establishing a short-range communication connection between the lighting control device and each of the light-emitting devices respectively, the solutions presented in the embodiments of the present application can reduce a large number of communication connection establishment processes, thereby saving communication resources, and improving user experience.

It should be noted that the above description and subsequent detailed description illustratively introduce the present disclosure in the form of embodiments, and are used to assist the interpretation and understanding of the Summary of the Invention claimed by the present disclosure.

### Description of Drawings

In order to make the above and other objects, features, advantages, and embodiments of the present disclosure more obvious and easily understandable, drawings in the specification are introduced as follows:
FIG. 1 shows a schematic diagram of a lighting control system according to an embodiment of the present application;
FIG. 2 shows a schematic flowchart of a method for setting a sequence number of a light-emitting device according to an embodiment of the present application;
FIG. 3 shows a schematic flowchart of a method for setting a sequence number of a light-emitting device according to an embodiment of the present application;
FIG. 4 shows a schematic flowchart of a method for setting a sequence number of a light-emitting device according to an embodiment of the present application; and
FIG. 5 illustratively shows a device interaction diagram of a method for setting a sequence number of a light-emitting device according to an embodiment of the present application.

### Detailed Description

Several illustrative embodiments are described with respect to the accompanying drawings, which form a part of the specification. Although particular embodiments that can implement one or more aspects of the present disclosure are described below, other embodiments may be used and various modifications may be made without departing from the scope of the present disclosure or the spirit of the appended claims.

As described above, in an application scenario where a plurality of light-emitting devices are used, particularly in a case where these light-emitting devices have same appearance and same model, before these light-emitting devices are actually controlled to emit light, it is necessary to set or mark these light-emitting devices with sequence numbers, so as to facilitate grouping them for lighting effect control.

With the development of wireless lighting technology, at present, light-emitting devices may also be wirelessly controlled. For example, these light-emitting devices may be Bluetooth low energy (BLE) light-emitting devices, and may be controlled via a computing device by establishing a wireless Bluetooth connection with the computing device. Accordingly, a plurality of same light-emitting devices are usually marked under the control of the computing device, so that each of the light-emitting devices can be assigned with a corresponding identifier (for example, a sequence number), which can be used for subsequent actual lighting effect control.

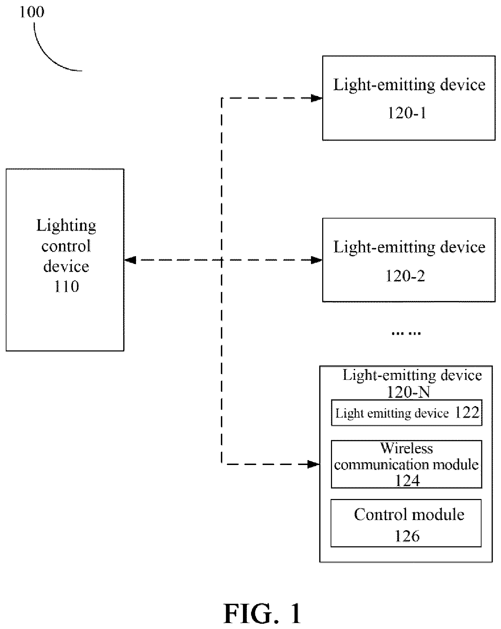

FIG. 1 shows a schematic diagram of a lighting control system according to an embodiment of the present application.

As shown in FIG. 1, a lighting control system 100 comprises a lighting control device 110 and a plurality of light-emitting devices (120-1, 120-2, ..., 120-N, collectively referred to as 120). For example, the lighting control device 110 generally may be a computing device (for example, a mobile phone, a computer, or a tablet computer). For example, the lighting control device 110 can run, e.g., a computer instruction or application to realize lighting control of each light-emitting device 120. The lighting control device 110 may comprise one or more processors and one or more memories, and the one or more memories may store computer instructions or computer programs. These computer instructions or computer programs, when executed by one or more processors, cause the one or more processors to implement corresponding operations.

Each light-emitting device 120 may comprise a light emitting device 122 (e.g., a set of LEDs and optionally other optical devices for adjusting optical paths), a wireless communication module 124, and a control module 126. The wireless communication module 124 may be configured to establish a short-range communication connection (for example, a short-range communication connection such as a BLE connection) with the lighting control device 110, so that various control information may be received from the lighting control device 110 or information may be sent to the lighting control device 110. The wireless communication module 124 may be, for example, a BLE communication module or other communication modules. The control module 126 may perform corresponding processing on various information received by the wireless communication module 124, and send a lighting control signal to the light emitting device 122 during actual lighting control, so that the light emitting device 122 emits light.

When the lighting control device 110 controls the light-emitting device 120, it is necessary to first set an identifier (e.g., a sequence number) of each light-emitting device 120, thereby conveniently grouping them and performing lighting control respectively groupwise during actual use. In addition, each light-emitting device 120 further needs to know about its own identifier, thereby normally emitting light based on its own identifier during actual use.

In some embodiments, when the lighting control device 110 sets the sequence number of each light-emitting device 120, the lighting control device 110 needs to establish a short-range communication connection (e.g., a short-range communication connection such as the BLE connection) with each light-emitting device 120, as shown by the dotted line in FIG. 1. For example, an application installed on a mobile phone may be started, and a BLE wireless communication module may be invoked to establish the BLE connection with each light-emitting device 120. Then, the lighting control device 110 may send a relevant setup command to each light-emitting device 120 sequentially, thereby setting the sequence number of each light-emitting device 120 sequentially.

However, in some cases, there may be a large number, such as dozens, of light-emitting devices 120. Therefore, if the lighting control device is still communicatively connected to each light-emitting device 120, a large number of communication connections need to be established, which is very cumbersome and reduces user experience.

Therefore, an embodiment of the present application presents a method for setting a sequence number of a light-emitting device, which only needs to establish only one short-range communication connection between a lighting control device and a light-emitting device, and can complete setting of sequence numbers of all light-emitting devices by sequentially providing user inputs to the light-emitting devices via a user, and using a broadcast function of the light-emitting devices. Compared with the establishing a short-range communication connection between the lighting control device and each of the light-emitting devices respectively, the solutions presented in the embodiments of the present application can reduce a large number of communication connection establishment processes when numbering the light-emitting devices, thereby saving communication resources, and improving the user experience.

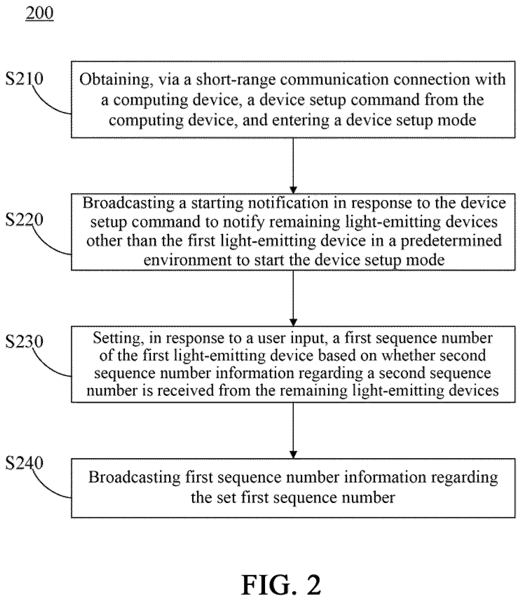

The solutions for setting a sequence number of a light-emitting device according to the embodiments of the present application are introduced in detail below in conjunction with FIGS. 2 to 5.

FIG. 2 shows a schematic flowchart of a method for setting a sequence number of a light-emitting device according to an embodiment of the present application. The method may be implemented at any one of the light-emitting devices shown in FIG. 1 (referred to as a first light-emitting device), and the first light-emitting device establishes a short-range communication connection, such as a BLE connection, with a computing device (e.g., the lighting control device shown in FIG. 1).

As shown in FIG. 2, step S210: obtaining, via a short-range communication connection with a computing device, a device setup command from the computing device, and entering a device setup mode in response to the device setup command.

For example, the lighting control device 100 shown in FIG. 1 may select a first light-emitting device from a plurality of light-emitting devices to establish a short-range communication connection based on an application running thereon, for example, based on a general wireless communication protocol, such as a Bluetooth BLE protocol. Then, the lighting control device 100 may send a device setup command to the first light-emitting device via the short-range communication connection. Optionally, the lighting control device 100 may send a preset number of to-be-connected light-emitting devices to the first light-emitting device together with the sending the device setup command via the short-range communication connection.

Step S220: broadcasting a notification in response to the device setup command to notify remaining light-emitting devices other than the first light-emitting device in a predetermined environment to enter the device setup mode.

For example, the first light-emitting device is generally one of a plurality of light-emitting devices in a predetermined environment, which may be, for example, a concert hall, a music hall, an exhibition room, a room in an entertainment venue, or a room for arranging an entertainment device at home, etc., which is not limited in the present application, as long as there are a plurality of light-emitting devices in the predetermined environment.

The first light-emitting device may be configured with a wireless communication module, which not only is used for short-range communication connection with the computing device (as described above), but also can implement a broadcast function without the need to establish a short-range communication connection with the remaining light-emitting devices (the number may be one or more) in the environment. All of the remaining light-emitting devices may each comprise a wireless communication module, and thus also have the broadcast function. In addition, it should be noted that, as described above, any one of the light-emitting devices in the predetermined environment may be a first light-emitting device here (i.e., the light-emitting device that establishes a short-range communication connection with the lighting control device).

Therefore, each of the remaining light-emitting devices in the predetermined environment may start and enter the device setup mode in response to receiving a notification broadcasted by the first light-emitting device. For example, each remaining light-emitting device in the device setup mode may start to monitor whether other light-emitting devices are broadcasting sequence number information regarding sequence numbers thereof.

Step S230: setting, in response to a user input, a first sequence number of the first light-emitting device based on whether sequence number information (which may also be referred to as second sequence number information in order to be distinguished from the first sequence number information, and the number may be one or more) regarding the sequence number (which may also be referred to as a second sequence number in order to be distinguished from the first sequence number, and the number may be one or more) is received from the remaining light-emitting devices.

For example, when receiving the user input, each light-emitting device (including the first light-emitting device and each remaining light-emitting device) in the predetermined environment may set its own sequence number based on sequence numbers of the light-emitting devices of which ranking has been completed. Specifically, in response to the user input, the sequence number of the first light-emitting device may be set to 1 in a case where the first light-emitting device has not received any second sequence number information from the remaining light-emitting devices, that is, in a case where no other light-emitting device has set its own sequence number and broadcasted second sequence number information regarding the sequence number, that is, the first light-emitting device is a first set light-emitting device. The sequence number may be included in the first sequence number information to be broadcasted by the first light-emitting device. In another aspect, in a case where the first light-emitting device has received at least one piece of second sequence number information from the remaining light-emitting devices, that is, in a case where at least one other light-emitting device has set its own sequence number and broadcasted the second sequence number information regarding the sequence number, the sequence number of the first light-emitting device may be set to a maximum sequence number among second sequence numbers associated with the at least one piece of second sequence number information plus 1, and may be included in the first sequence number information to be broadcasted by the first light-emitting device.

For example, after entering the device setup mode, the first light-emitting device will monitor the sequence number information (including the sequence number) broadcasted by the remaining light-emitting devices in the predetermined environment all along. When a user enters an input for the first light-emitting device (for example, presses a button installed on the first light-emitting device), if the first light-emitting device has not previously received a sequence number broadcasted by any other light-emitting device, the control module of the first light-emitting device (as shown in FIG. 1) may set its sequence number to 1. If the first light-emitting device has received the sequence number 1 and a sequence number 2 broadcasted by light-emitting devices among the remaining light-emitting devices before the user enters the input, the control module of the first light-emitting device (as shown in FIG. 1) may set its sequence number to 3. The control module of the first light-emitting device may include the sequence number set by it in the sequence number information for broadcasting.

Step S240: broadcasting first sequence number information regarding the set first sequence number.

For example, the control module of the first light-emitting device may broadcast the sequence number information comprising the sequence number set by it in the predetermined environment via the wireless communication module, so that each remaining light-emitting device in the predetermined environment that is monitoring the broadcasted sequence number information may receive the first sequence number broadcasted by the first light-emitting device, and so that the second light-emitting device that sets its sequence number immediately after setting the sequence number of the first light-emitting device (for example, the user immediately presses the second light-emitting device) may set its own sequence number by referring to the first sequence number broadcasted by the first light-emitting device.

Optionally, upon each receipt of second sequence number information regarding a new second sequence number (from a new light-emitting device whose sequence number has just been set) or when its own first sequence number is set, the first light-emitting device may send indication information indicating the new second sequence number or indication information indicating the first sequence number, that is, indication information indicating a latest sequence number obtained by the first light-emitting device, to the computing device (for example, the lighting control device shown in FIG. 1) via the short-range communication connection. For example, after receiving indication information indicating different sequence numbers sequentially, the computing device may display setting progress on its associated display. In addition, when a sequence number indicated by the received indication information is equal to a preset total number, that is, the setting has been completed, the computing device may send a setup-stop command to the first light-emitting device via the short-range communication connection, and then the first light-emitting device may broadcast a notification associated with the setup-stop command, so that all of the light-emitting devices exit the device setup mode, and no longer monitor various information broadcasted in the predetermined environment.

Optionally, as described above, the first light-emitting device may further obtain a preset number of to-be-set light-emitting devices from the computing device together with the device setup command via the short-range communication connection, and in response to the received maximum sequence number broadcasted by other light-emitting devices being equal to the preset number or in response to the first sequence number of the first light-emitting device being equal to the preset number (that is, setting of the preset number of required devices has been completed and no further setting is required), send indication information to the computing device via a wireless short-range connection to indicate that setting of the computing device has been completed, so that the computing device can generate the setup-stop command. Or, since each light-emitting device corresponds to a broadcast address, the first light-emitting device may further send the indication information to the computing device alternatively in response to detecting that the number of broadcast addresses broadcasting the sequence number information is equal to the preset number. Then, the first light-emitting device may receive, in response to sending the indication information, the setup-stop command from the computing device via the short-range communication connection, and broadcast the setup-stop command, so that the remaining light-emitting devices exit the device setup mode.

Optionally, in some embodiments, the setting of all light-emitting devices in the predetermined environment may be implemented, that is, the computing device may not be required to send the preset number of to-be-set light-emitting devices. In this case, the first light-emitting device may send indication information indicating completion of setting to the computing device, in response to not receiving the sequence number information broadcasted by a new broadcast address for a predetermined duration, or not receiving a sequence number greater than a currently received sequence number for the predetermined duration, so that the computing device may generate the setup-stop command. Or, more generally, the computing device may generate the setup-stop command in response to expiration of a predetermined period of time set based on experience, so as to send it to the first light-emitting device via the short-range communication connection.

It can be seen that in this method, it is only necessary to establish only one short-range communication connection between the first light-emitting device and the lighting control device. The first light-emitting device may broadcast a notification to the remaining light-emitting devices in the predetermined environment, so that each light-emitting device may start to monitor sequence numbers of other light-emitting devices, and broadcast its own sequence number using the broadcast function. Therefore, the first light-emitting device can complete the setting of its own sequence number based on the user input provided by the user with reference to the sequence numbers broadcasted by other light-emitting devices. In addition, each of the remaining light-emitting devices also similarly completes the setting of its own sequence number in response to the user input and with reference to the sequence numbers broadcasted by other light-emitting devices, thereby completing the setting of sequence numbers of all light-emitting devices. Compared with the establishing a short-range communication connection between the lighting control device and each of the light-emitting devices respectively, this solution does not need a large number of communication connection establishment processes, thereby saving communication resources, and improving user experience.

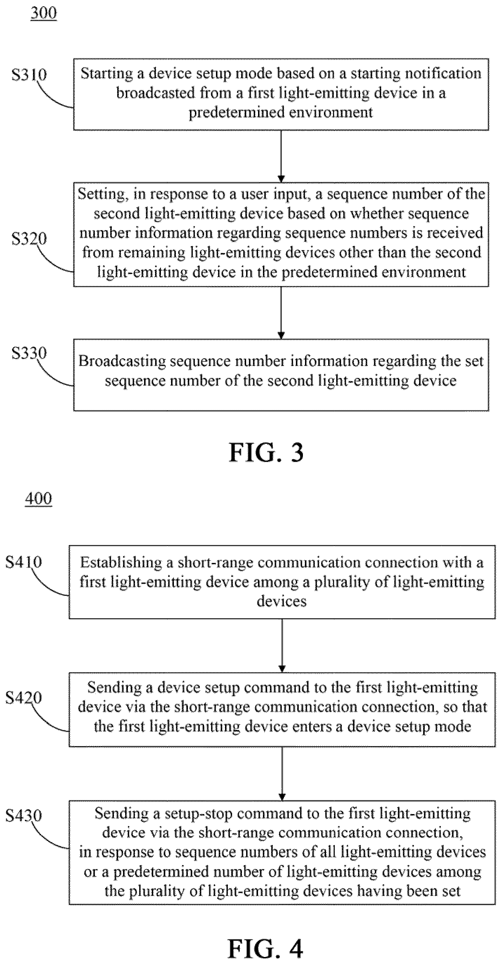

FIG. 3 shows a schematic flowchart of a method for setting a sequence number of a light-emitting device according to an embodiment of the present application. The method may be implemented at any one of the light-emitting devices shown in FIG. 1 (referred to as a second light-emitting device), and the second light-emitting device does not establish a short-range communication connection with a computing device (e.g., the lighting control device shown in FIG. 1), i.e., failing to obtain any information directly from the computing device.

As shown in FIG. 3, step S310: entering a device setup mode based on a notification broadcasted from a first light-emitting device in a predetermined environment.

For example, this step may correspond to the step S220 described with reference to FIG. 2, wherein the first light-emitting device sends a notification to the second light-emitting device in the predetermined environment after obtaining the device setup command from the computing device based on the short-range communication connection, so that the second light-emitting device can start the device setup mode based on the notification. The broadcast function of any light-emitting device is implemented via its own wireless communication module (such as a BLE Bluetooth module) without a practical communication connection. For example, the second light-emitting device in the device setup mode can start to monitor whether remaining light-emitting devices (including the first light-emitting device) in the predetermined environment are broadcasting sequence number information including sequence numbers thereof.

Step S320: setting, in response to a user input, a sequence number of the second light-emitting device based on whether sequence number information regarding sequence numbers is received from remaining light-emitting devices other than the second light-emitting device in the predetermined environment.

Corresponding to the step S230 described with reference to FIG. 2, the second light-emitting device may, in response to the user input, set the sequence number of the second light-emitting device to 1, in a case of not receiving sequence number information from the remaining light-emitting devices other than the second light-emitting device in the predetermined environment, and include it in the sequence number information to broadcast the sequence number information, so that other light-emitting devices in the predetermined environment (including the first light-emitting device) can set their own sequence numbers by referring to the sequence number of the second light-emitting device. In another aspect, in response to the user input and in a case where at least one piece of sequence number information regarding corresponding at least one sequence number is received from the remaining light-emitting devices, the sequence number of the second light-emitting device is set to a maximum sequence number among sequence numbers associated with the at least one piece of sequence number information plus 1, and is included in the sequence number information to broadcast the sequence number information. Since the first light-emitting device that establishes the short-range communication connection with the computing device is not necessarily a first set light-emitting device, the sequence number of the second light-emitting device here may also be set to 1.

Step S330: broadcasting sequence number information regarding the set sequence number of the second light-emitting device.

For example, a control module of the second light-emitting device may broadcast the sequence number information comprising the sequence number set by it in the predetermined environment via the wireless communication module, so that each remaining light-emitting device in the predetermined environment that is monitoring the broadcasted sequence number information may receive the sequence number broadcasted by the second light-emitting device, and so that a light-emitting device that sets its sequence number immediately after setting the sequence number of the second light-emitting device (for example, the user immediately presses the light-emitting device) may set its own sequence number by referring to the sequence number broadcasted by the second light-emitting device.

Optionally, similarly, the second light-emitting device may further exit the device setup mode, in response to receiving a notification associated with a broadcasted setup-stop command from the first light-emitting device (for example, a predetermined number of light-emitting devices have been set or a sequence number of a new light-emitting device has not been set for a predetermined duration).

The above description of FIG. 2 may be referred to for the generation of the setup-stop command, which will not be repeated here.

It can be seen that, with the broadcast function of the second light-emitting device, sequence number monitoring can be started in response to the notification broadcasted from the first light-emitting device, and based on the user input provided by the user to the second light-emitting device, the setting of its own sequence number may be completed by referring to sequence numbers broadcasted by other light-emitting devices, without the need to establish a communication connection between the second light-emitting device and the computing device, thereby saving communication resources and improving user experience.

FIG. 4 shows a schematic flowchart of a method for setting a sequence number of a light-emitting device according to an embodiment of the present application. The method may be implemented at a computing device, such as the lighting control device shown in FIG. 1, for example, implemented via the lighting control device by running an application installed thereon.

As shown in FIG. 4, step S410: establishing a short-range communication connection with a first light-emitting device among a plurality of light-emitting devices in a predetermined environment.

For example, each of the plurality of light-emitting devices in the predetermined environment is equipped with a wireless communication module, such as a BLE Bluetooth module, and can broadcast, so that the lighting control device can scan these light-emitting devices, then can respond to a user input to determine the first light-emitting device from these light-emitting devices, and can establish a short-range communication connection with the first light-emitting device.

Step S420: sending a device setup command to the first light-emitting device via the short-range communication connection, so that the first light-emitting device enters a device setup mode.

For example, similar to the above description of the step S210 with reference to FIG. 2, the lighting control device may send the device setup command to the first light-emitting device via the short-range communication connection. Optionally, the lighting control device 100 may further send a preset number of to-be-connected light-emitting devices to the first light-emitting device together with the sending the device setup command via the short-range communication connection. In this way, the first light-emitting device may broadcast a notification, so that each of remaining light-emitting devices other than the first light-emitting device in the predetermined environment may enter the device setup mode in response to receiving the notification broadcasted by the first light-emitting device.

Step S430: sending a setup-stop command to the first light-emitting device via the short-range communication connection, in response to sequence numbers of all light-emitting devices or a predetermined number of light-emitting devices among the plurality of light-emitting devices having been set.

For example, sequence number information indicating new sequence numbers (for the first sequence number of the first light-emitting device or new other light-emitting devices whose sequence numbers are set) may be received from the first light-emitting device sequentially. For example, after receiving different sequence numbers sequentially, the lighting control device may display setting progress on its associated display. In addition, when a sequence number associated with the received sequence number information is equal to a preset total number, that is, the setting has been completed, the lighting control device may send the setup-stop command to the first light-emitting device via the short-range communication connection, and then the first light-emitting device may broadcast a notification associated with the setup-stop command, so that all of the light-emitting devices exit the device setup mode, and no longer monitor various information broadcasted in the predetermined environment.

Optionally, the lighting control device may further receive second indication information indicating that the setting of the light-emitting devices has been completed from the first light-emitting device via a wireless short-range connection to generate the setup-stop command. Then, the first light-emitting device can receive the setup-stop command from the lighting control device via the short-range communication connection, and broadcast the setup-stop command, so that other light-emitting devices exit the device setup mode.

Optionally, in some embodiments, the lighting control device can generate the setup-stop command in response to expiration of a predetermined period of time based on experience, so as to send it to the first light-emitting device via the short-range communication connection.

It can be seen that the lighting control device can establish a wireless connection only with the first light-emitting device without the need to connect all light-emitting devices. With the broadcast function of each light-emitting device, the sequence numbers of all light-emitting devices can be set, and after the setting is completed, the device setup mode of all light-emitting devices can be stopped by sending the setup-stop command only to the first light-emitting device, thereby saving communication resources, and improving user experience.

After each light-emitting device in the predetermined environment has been set with a corresponding sequence number thereof, it may be conveniently grouped and controlled groupwise. For example, in subsequent use, a plurality of numbered light-emitting devices may be grouped at the lighting control device. For example, light-emitting devices with sequence numbers 1 to 5 may be divided into a first group for placement at a preset position of the first group, light-emitting devices with sequence numbers 6 to 10 may be divided into a second group for placement at a preset position of the second group, and light-emitting devices with sequence numbers 11 to 15 may be divided into a third group for placement at a preset position of the third group.

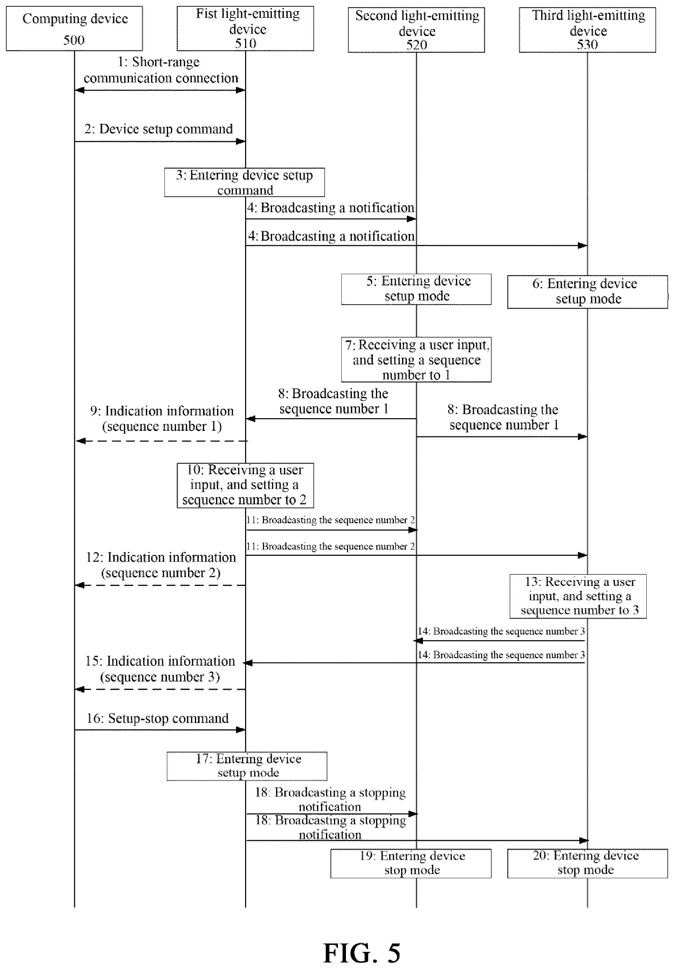

FIG. 5 illustratively shows a device interaction diagram of a method for setting a sequence number of a light-emitting device according to an embodiment of the present application. FIG. 5 illustratively shows a computing device 500, a first light-emitting device 510, a second light-emitting device 520, and a third light-emitting device 530. It should be understood that the number of light-emitting devices shown in FIG. 5 is only an example. The computing device 500 in FIG. 5 may be the lighting control device 110 in FIG. 1, and the first to third light-emitting devices may be the light-emitting devices 120 shown in FIG. 1.

As shown in FIG. 5, in process 1, the computing device 500 establishes a short-range communication connection with the first light-emitting device 510. In process 2, the computing device 500 sends a device setup command to the first light-emitting device 510 via the short-range communication connection. In process 3, the first light-emitting device 510 enters a device setup mode in response to the device setup command. In process 4, the first light-emitting device 510 broadcasts a notification. In processes 5 and 6, the second light-emitting device 520 and the third light-emitting device 530 enter the device setup mode, respectively.

In process 7, the second light-emitting device 520 receives a user input, and sets its sequence number to 1 in response to the user input (because of not receiving sequence numbers broadcasted by other light-emitting devices). In process 8, the second light-emitting device 520 broadcasts the sequence number 1 set by it. Optionally, in process 9, in a case of receiving the sequence number 1 broadcasted by the second light-emitting device 520, the first light-emitting device 510 may send indication information indicating the sequence number 1 to the computing device 500 via the short-range communication connection.

Then, in process 10, the first light-emitting device 510 receives the user input, and sets its sequence number as 2 in response to the user input (because of having received the sequence number 1 broadcasted by other light-emitting devices). In process 11, the first light-emitting device 510 broadcasts the sequence number 2 set by it. Optionally, in process 12, the first light-emitting device 510 may send indication information indicating the sequence number 2 to the computing device 500 via the short-range communication connection.

Then, in process 13, the third light-emitting device 530 receives the user input, and sets its sequence number as 3 in response to the user input (because of having received the sequence numbers 1 and 2 broadcasted by other light-emitting devices). In process 14, the third light-emitting device 510 broadcasts the sequence number 3 set by it. Optionally, in process 15, in a case of receiving the sequence number 3 broadcasted by the third light-emitting device 520, the first light-emitting device 510 may send indication information indicating the sequence number 3 to the computing device 500 via the short-range communication connection.

In process 16, the computing device 500 may send a setup-stop command to the first light-emitting device 510 via the short-range communication connection based on the fact that the sequence number 3 indicated by the received indication information is equal to a preset number 3. In process 17, the first light-emitting device 510 exits the device setup mode in response to the setup-stop command. In process 18, the first light-emitting device 510 broadcasts a notification associated with the setup-stop command, and then in processes 19 and 20, the second light-emitting device 520 and the third light-emitting device 530 exit the device setup mode respectively.

The above description for FIGS. 2 to 4 may be referred to for more details of each process, which will not be repeated here.

It can be seen that the lighting control device can establish a wireless connection only with the first light-emitting device without the need to connect all light-emitting devices. With the broadcast function of each light-emitting device, the sequence numbers of all light-emitting devices can be set, and after the setting is completed, the device setup mode of all light-emitting devices can be stopped by sending the setup-stop command only to the first light-emitting device, thereby saving communication resources, and improving user experience.

According to another aspect of the present application, a light-emitting device is further provided. The light-emitting device may be the light-emitting device 120 as described with reference to FIG. 1.

For example, the light-emitting device may comprise a light emitting device (e.g., a set of LEDs and optionally other optical devices for adjusting optical paths), a wireless communication module, and a control module. The wireless communication module may be configured to establish a short-range communication connection (e.g., a BLE connection) with the lighting control device 110, so that various control information may be received from the lighting control device 110 or information may be sent to the lighting control device 110, or may be configured to implement a broadcast function, or may further establish a connection with other light-emitting devices to form a MESH network, etc. The control module may perform corresponding processing based on various information received by the wireless communication module, and send a lighting control signal to the light emitting device during actual lighting control, so that the light emitting device emits light.

For example, according to an embodiment of the present application, during setting of a sequence number of a light-emitting device, in a case where the light-emitting device is a first light-emitting device connected to a computing device (e.g., a lighting control device), a wireless communication module may obtain a device setup command from the computing device via the short-range communication connection, and send it to a control module, so that the control module may enter the device setup mode; in addition, the wireless communication module may further broadcast a notification to notify remaining light-emitting devices in a predetermined environment to enter the device setup mode; the control module may further set a first sequence number of the first light-emitting device in response to the user input based on whether sequence number information is received from the remaining light-emitting devices; and the wireless communication module may further broadcast sequence number information regarding the set sequence number.

In addition, in a case where the light-emitting device is a second light-emitting device that is not connected to the computing device (e.g., the lighting control device), the control module may enter the device setup mode based on a notification received from the wireless communication module and broadcasted from the first light-emitting device in the predetermined environment, and set, in response to a user input, a sequence number of the second light-emitting device based on whether sequence number information is received from the remaining light-emitting devices; and the wireless communication module may further broadcast sequence number information regarding the set sequence number.

As an example, the control module or a processor of the present application may comprise an integrated circuit chip having a signal processing capability. The processor may be a general-purpose processor, a digital signal processor (DSP), an application specific integrated circuit (ASIC), a field programmable gate array (FPGA) or other programmable logic devices, a discrete gate or transistor logic device, or a discrete hardware component, for implementing or executing the methods, steps, and logic block diagrams disclosed in the embodiments of the present disclosure. In addition, the processor may further comprise a memory or be combined with a memory. The memory and a computer-readable storage medium of the present application may comprise a nonvolatile storage medium. The nonvolatile storage medium stores a computer-executable program, wherein the computer-executable program, when executed, causes the processor to implement various operations as described above.

The nonvolatile memory may be a read-only memory (ROM), a programmable read-only memory (PROM), an erasable programmable read-only memory (EPROM), an electrically erasable programmable read-only memory (EEPROM), or a flash memory. It should be noted that the memories of the methods described herein are intended to include, but are not limited to, these and any other suitable types of memories.

According to another aspect of the present application, a computer-readable storage medium is further provided, storing a computer program or instruction thereon, wherein the computer program or instruction, when executed by a processor, causes the processor to execute the method for setting a sequence number of a light-emitting device as described with reference to FIGS. 2-4.

As used herein (including in the claims), "or" used in enumeration of items (e.g., enumeration of items followed by a wording such as "at least one of" or "one or more of") indicates inclusive enumeration, such that, for example, enumeration of at least one of A, B, or C means A or B or C or AB or AC or BC or ABC (i.e., A and B and C). Likewise, as used herein, the phrase "based on" should not be construed as referring to a closed set of conditions. For example, an exemplary step described as "based on condition A" may be based on both condition A and condition B without departing from the scope of the present disclosure. In other words, as used herein, the phrase "based on" should be interpreted in the same manner as the phrase "based at least in part on".

In the appended drawings, similar components or features may have the same reference labels. Additionally, various components of the same type may be distinguished by following the reference label with a dash and a second label that distinguishes between the similar components. If only the first reference label is used in the specification, the description is applicable to any one of the similar components having the same first reference label regardless of the second reference label or other subsequent reference labels.

Example configurations are described herein in conjunction with the detailed descriptions set forth in the accompanying drawings, but are not intended to represent all examples that may be implemented or fall within the scope of the claims. As used herein, the term "exemplary" means "serving as an example, instance, or illustration," and does not mean "preferred" or "advantageous over other examples". The detailed description includes specific details for the purpose of providing a thorough understanding of the described techniques. However, these techniques may be practiced without these specific details. In some instances, well-known structures and devices are shown in block diagram form in order to avoid obscuring the concepts of the examples being described.

The description herein is provided to enable those skilled in the art to make or use the present disclosure. Various modifications to the present disclosure will be readily apparent to those skilled in the art, and the generic principles defined herein may be applied to other variations without departing from the scope of the present disclosure. Therefore, the present disclosure is not limited to the examples and designs described herein, but is intended to be consistent with the widest scope of the principles and novel features disclosed herein.

## Claims

1. A method for setting a sequence number of a light-emitting device, implemented by a first light-emitting device, wherein the first light-emitting device establishes a short-range communication connection with a computing device, and the method comprises:
obtaining a device setup command from the computing device via the short-range communication connection, and entering a device setup mode in response to the device setup command;
broadcasting a notification in response to the device setup command to notify remaining light-emitting devices other than the first light-emitting device in a predetermined environment to enter the device setup mode;
setting, in response to a user input, a first sequence number of the first light-emitting device based on whether sequence number information regarding sequence numbers is received from the remaining light-emitting devices; and
broadcasting first sequence number information regarding the first sequence number.

2. The method according to claim 1, wherein the setting the first sequence number of the first light-emitting device comprises:
setting, in response to the user input, the first sequence number of the first light-emitting device to 1, in a case where no sequence number information regarding the sequence numbers is received from the remaining light-emitting devices.

3. The method according to claim 1 or 2, wherein the setting the first sequence number of the first light-emitting device comprises:
setting, in response to the user input and in a case where at least one piece of sequence number information is received from the remaining lighting devices, the first sequence number of the first lighting device to a maximum sequence number among sequence numbers associated with the at least one piece of sequence number information plus 1.

4. The method according to claim 3, wherein the method further comprises:
obtaining a preset number of to-be-set light-emitting devices from the computing device via the short-range communication connection;
sending indication information to the computing device via the short-range communication connection, in response to the maximum sequence number being equal to the preset number, or in response to the first sequence number of the first light-emitting device being equal to the preset number, or in response to detecting that a number of broadcast addresses broadcasting the at least one piece of sequence number information is equal to the preset number; and
receiving a setup-stop command from the computing device via the short-range communication connection, and broadcasting a notification associated with the setup-stop command, so that the remaining light-emitting devices exit the device setup mode.

5. The method according to any preceding claim, wherein the method further comprises:
sending, upon each receipt of sequence number information regarding a new sequence number or in response to setting the first sequence number, indication information indicating the new sequence number or the first sequence number to the computing device via the short-range communication connection; and
receiving a setup-stop command from the computing device via the short-range communication connection, and broadcasting a notification associated with the setup-stop command, so that the remaining light-emitting devices exit the device setup mode.

6. The method according to any preceding claim, wherein the short-range communication connection is a communication connection based on Bluetooth low energy technology.

7. A method for setting a sequence number of a light-emitting device, implemented by a second light-emitting device, wherein the second light-emitting device does not establish a short-range communication connection with a computing device, and the method comprises:
entering a device setup mode based on a notification broadcasted from a first light-emitting device in a predetermined environment;
setting, in response to a user input, a sequence number of the second light-emitting device based on whether sequence number information regarding sequence numbers is received from remaining light-emitting devices other than the second light-emitting device in the predetermined environment; and
broadcasting sequence number information regarding the sequence number of the second light-emitting device.

8. The method according to claim 7, wherein the setting the sequence number of the second light-emitting device comprises:
setting, in response to the user input, the sequence number of the second light-emitting device to 1, in a case where no sequence number information regarding sequence numbers is received from the remaining light-emitting devices.

9. The method according to claim 7 or 8, wherein the setting the sequence number of the second light-emitting device comprises:
setting, in response to the user input and in a case where at least one piece of sequence number information regarding sequence numbers is received from the remaining light-emitting devices, the sequence number of the second light-emitting device to a maximum sequence number among sequence numbers associated with the at least one piece of sequence number information plus 1.

10. The method according to any of claims 7 to 9, wherein the method further comprises:
exiting the device setup mode, in response to receiving a broadcasted notification associated with a setup-stop command from the first light-emitting device.

11. A method for setting a sequence number of a light-emitting device, implemented by a computing device and comprising:
establishing a short-range communication connection with a first light-emitting device among a plurality of light-emitting devices in a predetermined environment;
sending a device setup command to the first light-emitting device via the short-range communication connection, so that the first light-emitting device enters a device setup mode, wherein the first light-emitting device broadcasts a notification in response to the device setup command to notify remaining light-emitting devices other than the first light-emitting device to enter the device setup mode; and
sending a setup-stop command to the first light-emitting device via the short-range communication connection, in response to sequence numbers of all light-emitting devices or a predetermined number of light-emitting devices among the plurality of light-emitting devices having been set.

12. The method according to claim 11, wherein the method further comprises:
receiving indication information indicating a sequence number equal to the predetermined number or second indication information indicating completion of setting from the first light-emitting device via the short-range communication connection; and
generating the setup-stop command, in response to receiving the indication information or the second indication information.

13. The method according to claim 11 or 12, wherein the method further comprises:
generating the setup-stop command, in response to a lapse of a predetermined period of time from sending the device setup command.

14. A light-emitting device, configured to execute the method according to any one of claims 1 to 10.

15. A computer-readable storage medium, storing a computer program or instruction thereon, wherein the computer program or instruction, when executed by a processor, causes the processor to execute the method according to any one of claims 1 to 13.
